(19) Europäisches Patentamt
European Patent Office
Office européen des brevets

(11) Publication number: 0 413 294 A2

(12) # EUROPEAN PATENT APPLICATION

(21) Application number: 90115543.2

(51) Int. Cl.[5]: C08F 297/02

(22) Date of filing: 14.08.90

(30) Priority: 18.08.89 US 395690

(43) Date of publication of application: 20.02.91 Bulletin 91/08

(84) Designated Contracting States: AT BE DE DK ES FR GB IT NL SE

(71) Applicant: THE DOW CHEMICAL COMPANY
2030 Dow Center Abbott Road P.O. Box 1967
Midland Michigan 48640-1967(US)

(72) Inventor: Walther, Brian W.
9378 Tasmania Avenue
Baton Rouge, Louisiana 70810(US)
Inventor: Marchand, Gary R.
4028 Lassen Drive
Baton Rouge, Louisiana 70814(US)
Inventor: Lo, Grace Y.
1032 Scott Street
Midland, Michigan 48640(US)
Inventor: Tung, Lu Ho
19 Kingwood Road
Oakland, California 94619(US)

(74) Representative: Sternagel, Hans-Günther, Dr. et al
Patentanwälte Dr. Michael Hann Dr. H.-G. Sternagel Sander Aue 30
D-5060 Bergisch Gladbach 2(DE)

(54) **Narrow molecular weight distribution block polymers and process therefor.**

(57) Extremely narrow molecular weight distribution block copolymers comprising isoprene are prepared utilizing multifunctional lithium based initiators and an initial diene block forming amount of butadiene.

EP 0 413 294 A2

# NARROW MOLECULAR WEIGHT DISTRIBUTION BLOCK POLYMERS AND PROCESS THEREFOR

The present invention relates to block polymers. More particularly, the present invention relates to narrow molecular weight distribution block polymers prepared by the use of multifunctional lithium based initiators.

It is previously known in the art to make block copolymers of monovinylidene aromatic monomers and conjugated dienes by the use of multifunctional lithium initiators. In USP 4,196,154 such lithium containing initiators which are soluble in hydrocarbon solvents and thus highly useful in the preparation of block copolymers are disclosed. Additional teachings regarding the use of multifunctional lithium based initiators are found in USP's 4,201,729; 4,200,718; 4,205,016; 4,172,190; and 4,196,153. Disadvantageously, however, multifunctional lithium containing initiators normally provide polymers having molecular weight distributions of about 1.1 or greater. Additional techniques such as the use of coinitiators such as lithium alkoxides or particular triamines such as pentamethyldiethylene triamine or combinations thereof may be used to obtain butadiene containing block copolymers having molecular weight distributions down to 1.06. Similar polymers containing primarily isoprene have not been known. This is because isoprene appears to be less easily polymerizable by anionic techniques compared to butadiene and even rapid polymer initiation does not occur.

It is known in the literature that block polymers of improved tensile strength are obtained if the block polymer has a reduced molecular weight distribution. In particular, a triblock polymer of the formula styrene/isoprene/styrene prepared by conventional coupling of monofunctional lithium initiated diblock polymers demonstrates significantly improved tensile strength for equivalent number average molecular weight polymers if the molecular weight distribution ($M_w/M_n$) is 1.03 instead of 1.20. (L. C. Case, Makromol Chem., V. 37, page 243, (1960)).

It would be desirable if there were provided block copolymers of isoprene having narrow molecular weight distribution.

According to the present invention there are provided narrow molecular weight distribution block polymers of the formula:

$B\text{-}B'\text{-}X\text{(}B'\text{-}B)$ or $A\text{-}B\text{-}B'\text{-}X\text{(}B'\text{-}B\text{-}A)$

wherein A is a block of a nonelastomeric monomer, B is a block of isoprene, B′ is a block of butadiene, and X is the remnant of a hydrocarbon soluble difunctional lithium initiator; said block copolymer having a molecular weight distribution ($M_w/M_n$) of less than 1.06.

The present inventors have now discovered that unlike isoprene, butadiene is able to rapidly add to the multifunctional initiator employed in the present invention, and subsequent polymerization produces an extremely narrow molecular weight distribution polybutadiene block. Having initiated the block polymer in an extremely uniform manner, additional monomer block components may be added and the narrow molecular weight distribution of the growing block polymer is retained. Preferably only sufficient butadiene is added to initiate the narrow molecular weight distribution block polymer formation without degrading the block polymer properties of the essentially polyisoprene block component.

In one embodiment of the present invention both butadiene and isoprene are added simultaneously and polymerization is initiated. In another embodiment, isoprene is added after butadiene has completely polymerized or substantially polymerized thereby forming the desired block copolymer of butadiene and isoprene wherein the predominant monomeric component is isoprene. Preferably, butadiene is employed in an amount from 1 to 25, most preferably from 5 to 15 percent by weight based on total diene weight. Because of this fact the isoprene based block polymers of the present invention may be prepared having an extremely narrow molecular weight distribution, a result which has been previously unattainable using multifunctional lithium based initiators.

After preparation of the basic polybutadiene/polyisoprene blocks the polymer may be terminated or further polymerized with a suitable nonelastomeric monomer and then terminated. Suitable nonelastomeric monomers include vinylaromatic monomers, such as styrene, α-methylstyrene, and mixtures thereof. In addition the polymer may be functionalized by incorporation of a nonelastomeric monomer bearing the desired functionality or modifiable to incorporate such functionality. Suitable functionalizing monomers include the methacrylate esters, particularly tertbutyl methacrylate. The tertiary butyl group may subsequently be removed under acid catalyzed hydrolysis conditions to yield the resulting methacrylic acid derivatives. Further ionomeric (salt) derivatives may be prepared by neutralizing the acid functionality with a basic compound such as a metal hydroxide, or by any other suitable technique.

A second technique for preparing functionalized polymers involves the subsequent free radical polymerization of terminated anionically polymerized polymers. Examples of suitable nonelastomeric monomers

usefully incorporated into the polymers of the present invention according to this technique include bromostyrene, acrylonitrile, methacrylonitrile, methylmethacrylate, etc. The foregoing monomers may be used in combination with the previously mentioned monovinylidene aromatic monomers if desired. Examples of block polymers containing both styrene and α-methylstyrene are found in USP 4,431,777 and 4,427,837. Block polymers containing styrene/acrylonitrile copolymer end blocks or bromostyrene end blocks are disclosed in USP 4,169,115.

The multifunctional initiator the remnant of which is expressed as X in the foregoing formulas is preferably a hydrocarbon soluble difunctional lithium based initiator having the formula

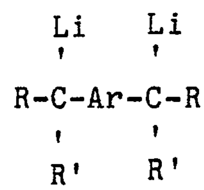

wherein R is independently each occurrence aryl or substituted aryl of up to 12 carbons, Ar is arylene or substituted arylene of up to 20 carbons and R′ is independently each occurrence $C_{3-10}$ alkylene.

Most preferably X is the remnant of an initiator corresponding to the formula:

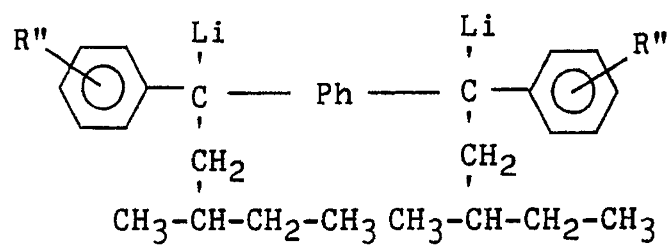

wherein Ph is phenylene, and R″ is $C_{1-12}$ alkyl especially methyl.

Specific suitable examples of the foregoing difunctional initiators are 1,3-phenylene-bis(3-methyl-1-phenylpentylidene)bis lithium, 1,4-phenylene-bis(3-methyl-1-phenylpentylidene)bis lithium, 1,3-phenylene-bis(3-methyl-1-(methyl )phenylpentylidene)bis lithium, and 1,3-phenylene-bis(3-methyl-1-(4-methyl)-phenylpentylidene)bis lithium.

Most desirably, the block polymers of the present invention are thermoplastic elastomers containing a nonelastomeric monomer content of less than 50 percent by weight of the total block polymer preferably less than 30 percent by weight of the total block polymer. The block polymers of the invention may be in standard geometry or one or more of the nonelastomeric monomer blocks may be tapered by inclusion of increasing amounts of isoprene near the isoprene/nonelastomeric monomer junction.

In addition to providing narrow molecular weight distribution products, the small amount of butadiene employed in the center of the polymer block structure beneficially effects the physical properties of the resulting block polymer. This result may be due to a unique domain structure that is created by the presence of the butadiene block structure. In a preferred embodiment, the relative molecular weights of the various block of the present invention are from about 30,000 to about 200,000 for the combined butadiene/isoprene block and from 0 to 50,000 for each nonelastomeric monomer block. The resulting block polymers are usefully employed as elastomers for pressure sensitive adhesive formulations and in other uses where elastomeric thermoplastics have been previously employed.

Polymerization of the foregoing monomers is conducted according to well known anionic polymerization conditions. Suitably, the monomers are polymerized at temperatures from 20 °C to 90 °C, preferably from 30 °C to 85 °C in the presence of a solvent. Suitable solvents include hexane, cyclohexane, toluene, benzene, n-pentane, isopentane and mixtures thereof. The initiator is employed in molar ratios from 1 X $10^{-6}$:1 to 1 X $10^{-3}$:1 based on total moles of monomer polymerized depending on the resulting desired polymer molecular weight.

Having described the invention the following examples are provided to further illustrate the invention and are not to be construed as limited.

In order to obtain the extremely narrow molecular weight distribution required by the present invention, it is helpful to employ a combination of the foregoing technique of butadiene/isoprene block formation and

use a cocatalyst (either lithium alkoxide or triamine) with the multifunctional initiator. In a preferred embodiment the polymers of the present invention are prepared utilizing an aliphatic triamine cocatalyst, especially N,N,N′,N″,N″-pentamethyldiethylene triamine, employed in an amount from 0.1:1 to 2.0:1 based on equivalents of initiator.

Example 1

A 5.0 gallon reactor was filled with 16.3 liters of purified cyclohexane and 5.2 mMoles of N,N,N′,N″,N″-pentamethyldiethylenetriamine (TA). The reaction mixture was warmed to 41 °C and 10.4 mMoles of 1,3-phenylene-bis(3-methyl-1-phenylpentylidene)bis-lithium (DFI) was added. Then 95 grams of polymerization grade butadiene was added to the reactor and allowed to react for 16 minutes. Then 1235.9 grams of isoprene monomer was added to the reactor with intensive mixing. After the isoprene polymerization was essentially complete, 234.9 grams of styrene monomer was added to the reaction mixture. The reactor temperature was maintained at 70 °C throughout the styrene polymerization. Total styrene polymerization time was 46 minutes. The reaction mixture was terminated with isopropanol and stabilized with standard stabilizers for polydiene polymers. The number average molecular weight (Mn) and the weight to number average molecular weight ratio ($M_w/M_n$) of the recovered block polymer were determined by gel permeation chromatography to be 144,000 and 1.040 respectively. The ratio of components of the resulting polymer was the same as the proportion of monomers added to the reaction.

Example 2

The polymerization in Example 1 was repeated several times with a few variations in the amounts of reagents used and the temperature of initiation. The results are listed in the following table. The results show molecular weight distributions of the resulting block polymer as indicated by $M_w/M_n$ ratios are consistently narrow.

| Ex. | TA ratio (1) | Percent butadiene (2) | Percent styrene (3) | Initiation temp. °C | Mn | $M_w/M_n$ |
|---|---|---|---|---|---|---|
| 2 | 0.15 | 8.1 | 15 | 40 | 157,900 | 1.046 |
| 3 | 0.25 | 6.1 | 15 | 41 | 157,400 | 1.058 |
| 4 | 0.15 | 10.6 | 15 | 40 | 158,300 | 1.052 |
| 5 | 0.15 | 10.6 | 15 | 40 | 143,900 | 1.043 |
| 6 | 0.15 | 10.5 | 15 | 40 | 140,100 | 1.047 |
| 7 | 0.15 | 11.0 | 15 | 45 | 141,400 | 1.027 |
| 8 | 0.08 | 8.1 | 15 | 44 | 141,776 | 1.036 |
| 9 | 0.15 | 8.8 | 15 | 45 | 138,300 | 1.034 |

1-Molar ratio of TA to moles of initiator lithium
2-Weight percent of butadiene to total monomer weight
3-Weight percent of styrene to total monomer weight

Comparative 1

The polymerization in Example 1 was substantially repeated except that butadiene monomer and TA were not used. The Mn and $M_w/M_n$ of the recovered polymer were 108,900 and 1.579 respectively.

Comparative 2

The polymerization in Example 1 was substantially repeated except that TA was not used. The Mn and Mw/Mn of the recovered block polymer were 214,400 and 1.356 respectively.

Comparative 3

The polymerization in Example 1 was substantially repeated except that butadiene monomer was not used. The Mn and $M_w/M_n$ of the recovered block copolymer were 161,200 and 1.068 respectively.

The above results indicate that improved molecular weight distribution isoprene containing block polymers are obtained by use of a multifunctional lithium based catalyst if a small amount of a butadiene block is polymerized prior to polymerization of isoprene. The most narrow molecular weight distribution block polymers are obtained by a combination of using a triamine coinitiator in combination with the present technique of initial butadiene polymerization.

## Claims

1. Narrow molecular weight distribution block polymers of the formula:
$B\text{-}B'\text{-}X\{B'\text{-}B)$ or $A\text{-}B\text{-}B'\text{-}X\{B'\text{-}B\text{-}A)$
wherein A is a block of a nonelastomeric monomer, B is a block of isoprene, B′ is a block of butadiene, and X is the remnant of a hydrocarbon soluble difunctional lithium initiator; said block copolymer having a molecular weight distribution ($M_w/M_n$) of less than 1.06.

2. A block polymer according to Claim 1 wherein the amount of butadiene is from 5 to 15 weight percent based on total diene monomer.

3. A block polymer according to Claim 1 wherein the nonelastomeric monomer is selected from the group consisting of monovinylidene aromatic monomers, methacrylic acid, esters and salt derivatives of methacrylic acid, acrylonitrile, and methacrylonitrile.

4. A block polymer according to Claim 1 wherein the hydrocarbon soluble difunctional lithium based initiator comprises 1,3- or 1,4-phenylene bis(3-methyl-1-phenylpentylidene)bis lithium, or 1,3- or 1,4- phenylene bis-(3-methyl-1-(4-methyl)phenylpentylidene)bis lithium.

5. A process for preparing narrow molecular weight distribution block polymers of the formula:
$B\text{-}B'\text{-}X\{B'\text{-}B)$ or $A\text{-}B\text{-}B'\text{-}X\{B'\text{-}B\text{-}A)$
wherein A is a block of a nonelastomeric monomer, B is a block of isoprene, B′ is a block of butadiene, and X is the remnant of a hydrocarbon soluble difunctional lithium initiator; said block copolymer having a molecular weight distribution ($M_w/M_n$) of less than 1.06 by polymerizing butadiene, isoprene and styrene monomers under anionic polymerization conditions with a difunctional lithium initiator characterized in that the amount of butadiene polymerized is from 1 to 25 percent by weight of total diene weight, butadiene is polymerized before isoprene and the polymerization is conducted in the presence of an aliphatic triamine.